(19) Europäisches Patentamt
European Patent Office
Office européen des brevets

(11) EP 1 411 071 A1

(12) **EUROPÄISCHE PATENTANMELDUNG**

(43) Veröffentlichungstag:
**21.04.2004 Patentblatt 2004/17**

(51) Int Cl.[7]: **C08G 18/38**, C08J 9/00

(21) Anmeldenummer: **03022293.9**

(22) Anmeldetag: **02.10.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **15.10.2002 DE 10247974**

(71) Anmelder: **Clariant GmbH**
**65929 Frankfurt am Main (DE)**

(72) Erfinder:
- **Knop, Susanne, Dr.**
  **50354 Hürth (DE)**
- **Huthmacher, Elke**
  **50374 Erftstadt (DE)**
- **Nettersheim, Toni**
  **53879 Euskirchen (DE)**

(74) Vertreter: **Paczkowski, Marcus, Dr.**
**Clariant Service GmbH**
**Patente, Marken, Lizenzen**
**Am Unisys-Park 1**
**65843 Sulzbach (DE)**

(54) **Flammwidrige Polyurethanweichschäume mit hoher Alterungsbeständigkeit**

(57) Die Erfindung betrifft flammwidrige Polyurethanweichschäume mit hoher Alterungsbeständigkeit, dadurch gekennzeichnet, dass sie eine Mischung aus Hydroxyalkylphosphonaten und chlorierten Phosphorsäureestern enthalten sowie ein Verfahren zur Herstellung solcher flammwidriger Polyurethanweichschäume.

EP 1 411 071 A1

## Beschreibung

Die Erfindung betrifft flammwidrige Polyurethanweichschäume mit hoher Alterungsbeständigkeit und ein Verfahren zu deren Herstellung.

Polyurethanschaumstoffe werden in vielen Bereichen, wie Möbel, Matratzen, Transport, Bau und technische Dämmung als Kunststoffe eingesetzt. Zum Erreichen hoher Flammschutzanforderungen, wie sie für Materialien u. a. für den Automobil-, Bahn- und Flugzeuginnenausstattungsbereich sowie die Bauisolierung gefordert sind, müssen Polyurethanschaumstoffe in der Regel mit Flammschutzmitteln ausgerüstet werden. Hierzu sind eine Vielzahl unterschiedlicher Flammschutzmittel bekannt und kommerziell erhältlich. Deren Verwendung stehen allerdings vielfach erhebliche anwendungstechnische Probleme bzw. toxikologische Bedenken entgegen.

So treten bei Verwendung fester Flammschutzmittel wie z.B. Melamin, Ammoniumpolyphosphat und Ammoniumsulfat dosiertechnische Probleme auf, die vielfach Modifikationen der Verschäumanlagen, d.h. aufwendige Umbauten und Anpassungen notwendig machen. Ein Großteil der eingesetzten flüssigen Flammschutzmittel, wie beispielsweise Tris(2-chlorethyl)-phosphat und Tris(2-chlorisopropyl)phosphat sind durch eine deutliche Migrationsneigung gekennzeichnet, die die Verwendbarkeit in offenzelligen Polyurethanweichschaumsystemen für die Automobil-Innenausstattung aufgrund der Anforderungen an die kondensierbaren Emissionen (Fogging) weitgehend einschränken.

Unter Fogging versteht man die Kondensation von verdampften flüchtigen Bestandteilen aus der Kraftfahrzeug-Innenausstattung an Glasscheiben, insbesondere an der Windschutzscheibe. Diese Erscheinung kann nach DIN 75201 quantitativ beurteilt werden.

Weiterhin werden aus ökotoxikologischen Gesichtspunkten sowie aufgrund verbesserter Brandnebenerscheinungen bezüglich Rauchgasdichte und Rauchgastoxizität halogenfreie Flammschutzmittelsysteme bevorzugt. Auch aus anwendungstechnischen Gründen können halogenfreie Flammschutzmittel von besonderem Interesse sein. So beobachtet man z.B. bei der Verwendung von halogenierten Flammschutzmitteln starke Korrosionserscheinungen an den zur Flammkaschierung von Polyurethanschäumen verwendeten Anlagenteilen. Dies kann auf die bei der Flammkaschierung halogenhaltiger Polyurethanschäume auftretenden Halogenwasserstoffsäure-Emissionen zurückgeführt werden.

Als Flammkaschierung bezeichnet man ein Verfahren zur Verbindung von Textilien und Schaumstoffen, bei der eine Seite einer Schaumstofffolie mit Hilfe einer Flamme angeschmolzen und in unmittelbarem Anschluss daran mit einer Textilbahn verpresst wird.

Vor dem Hintergrund des Trends zur Berücksichtigung von gasförmigen Emissionen (Volatile Organic Compounds = VOC) ergeben sich zudem wachsende Anforderungen an die Migrationsstabilität von Flammschutzmitteln.

Lösungen im Sinne hoher Migrationsstabilität bieten hydroxylgruppentragende oligomere Phosphorsäureester (DE-OS 43 42 972) und Hydroxyalkylphosphonate (DE-OS-199 27 548).

Die bisher bekannten Polyurethanschäume weisen häufig den Nachteil auf, dass beim Einsatz von reaktiven, flüssigen halogenfreien Flammschutzmitteln, insbesondere bei den in der DE-OS-43 42 972 genannten Phosphorsäureestern und den in der DE-OS-199 27 548 genannten Phosphonsäureestern zwar eine hoher Flammschutzmitteleffekt erreicht wird, aber gleichzeitig ein stark weichmachender Effekt auftritt und der resultierende Polyurethanschaum eine hohe hydrolytische Instabilität aufweist und dementsprechend nur eine geringe Hydrolysealterungsbeständigkeit der schaummechanischen Eigenschaften aufweist.

Zwar kann die Hydrolysealterungsbeständigkeit durch den Einsatz von halogenhaltigen Flammschutzmitteln verbessert werden, allerdings müssen dann unter anderem die oben beschriebenen Nachteile von halogenhaltigen Flammschutzmitteln in Bezug auf Rauchgastoxizität, Rauchgasdichte und Bildung von halogenhaltigen Spaltprodukten in Kauf genommen werden.

Es ist Aufgabe der vorliegenden Erfindung, ein halogenreduzierten und emissionsstabilen Polyurethanschaum zur Verfügung zu stellen, der gegenüber einem halogenfreien flammgeschützten Polyurethanschaum eine verbesserte Hydrolysealterungsbeständigkeit aufweist und gleichzeitig in seinem Halogengehalt gegenüber einem Polyurethanschaum der bereits bekannten Art reduziert ist.

Die vorliegende Aufgabe wird gelöst durch flammwidrige Polyurethanweichschäume mit hoher Alterungsbeständigkeit, dadurch gekennzeichnet, dass sie eine Mischung aus Hydroxyalkylphosphonaten und chlorierten Phosphorsäureestern enthalten.

Bevorzugt enthält die Mischung 40 bis 60 Gew.-% Hydroxyalkylphosphonate und 60 bis 40 Gew.-% chlorierte Phosphorsäureester.

Besonders bevorzugt enthält die Mischung 45 bis 55 Gew.-% Hydroxyalkylphosphonate und 55 bis 45 Gew.-% chlorierte Phosphorsäureester.

Die Hydroxyalkylphosphonate entsprechen der allgemeinen Formel I,

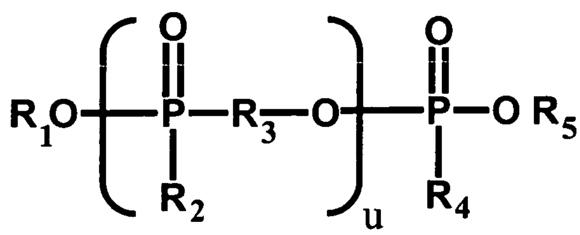

(I)

in der
u eine Kettenlänge von 0 bis 10
$R_1$, $R_5$ gleich oder verschieden sind und einen hydroxylgruppenhaltigen Rest der allgemeinen Formel II

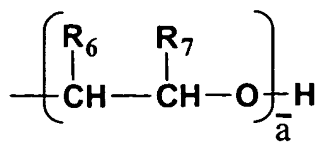

(II)

$R_2$, $R_4$ gleich oder verschieden sind und eine Alkyl-, Aryl- oder Alkylarylgruppe mit 1 bis 12 C-Atomen
$R_3$ einen Rest der allgemeinen Formel III

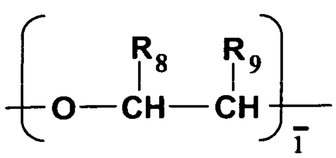

(III)

$\bar{a}$ eine durchschnittliche Kettenlänge von 0 bis 4

$\bar{i}$ eine durchschnittliche Kettenlänge von 0 bis 4 bedeuten und

$R_6$, $R_7$, $R_8$, $R_9$ gleich oder verschieden sind und unabhängig voneinander für H oder eine Alkylgruppe mit 1 bis 6 C-Atomen stehen.

Bevorzugt bedeutet u eine Kettenlänge von 0 oder 1, ä eine durchschnittliche Kettenlänge von 1 bis 2, $\bar{i}$ eine durchschnittliche Kettenlänge von 1 bis 2 und $R_2$, $R_4$ sind gleich oder verschieden und stehen unabhängig voneinander für eine Alkylgruppe mit 1 bis 5 C-Atomen, $R_6$, $R_7$, $R_8$, $R_9$ sind gleich oder verschieden sind stehen unabhängig voneinander für H oder eine Alkylgruppe mit 1 oder 2 C-Atomen.

Bevorzugt handelt es sich bei den Hydroxyalkylphosphonaten um Methanphosphonsäureoxethylat, Ethanphosphonsäureoxethylat, Methanphosphonsäurepropoxylat, Ethanphosphonsäure-propoxylat, Propanphosphonsäureoxethylat, Propanphosphonsäurepropoxylat, Diethylenglykolbis-(hydroxyalkoxy)methanphosphonat, und/oder Ethylenglykol-bis-(hydroxyalkoxy)ethanphosphonat. Erfindungsgemäß gehören hierzu auch die Diester und oligomere Diester der Ethan- bzw. Methanphosphonsäure mit Seitenketten von Blockcopolymeren aus Oxiran und Methyloxiran.

Bevorzugt handelt es sich bei den halogenierten Phosphorsäureestern um Tris(2-chlorethyl)phosphat, Tris (2-chlorisopropyl)phosphat, Dichlorisopropylphosphat, Trisdichlorisopropylphosphat und/oder Tetrakis(2-chlorethyl) ethylendiphosphat.

Die Erfindung betrifft auch ein Verfahren zur Herstellung von flammwidrigen Polyurethanweichschäumen mit hoher Alterungsbeständigkeit, dadurch gekennzeichnet, dass man organische Polyisocyanate mit Verbindungen mit mindestens 2 gegenüber Isocyanaten reaktionsfähigen Wasserstoffatomen mit üblichen Treibmitteln, Stabilisatoren,

Aktivatoren und/oder weiteren üblichen Hilfsund Zusatzstoffen in Gegenwart von halogenfreien Hydroxyalkylphosphonaten der allgemeinen Formel I und chlorierten Phosphorsäureestern umsetzt.

Bevorzugt werden organische Polyisocyanate mit Verbindungen mit mindestens 2 gegenüber Isocyanaten reaktionsfähigen Wasserstoffatomen mit üblichen Treibmitteln, Stabilisatoren, Aktivatoren und/oder weiteren üblichen Hilfs- und Zusatzstoffen in Gegenwart einer Mischung von halogenfreien Hydroxyalkylphosphonaten der allgemeinen Formel I und chlorierten Phosphorsäureestern umgesetzt.

Bevorzugt werden Mischungen aus Hydroxyalkylphosphonaten der allgemeinen Formel I und chlorierten Phosphorsäureestern in einer Menge von 0,01 bis 50 Gewichtsteilen, bezogen auf den resultierenden Polyurethanweichschaum, eingesetzt.

Bevorzugt werden Mischungen aus Hydroxyalkylphosphonaten der allgemeinen Formel I und chlorierten Phosphorsäureestern in einer Menge von 0,5 bis 20 Gewichtsteilen, bezogen auf den resultierenden Polyurethanweichschaum, eingesetzt.

Besonders bevorzugt werden Mischungen aus Hydroxyalkylphosphonaten der allgemeinen Formel I und chlorierten Phosphorsäureestern in einer Menge von 0,5 bis 10 Gewichtsteilen, bezogen auf den resultierenden Polyurethanweichschaum, eingesetzt.

Bei den Hydroxyalkylphosphonaten der allgemeinen Formel I handelt es sich um bei Verarbeitungstemperatur flüssige Verbindungen.

Bei den Hydroxyalkylphosphonaten der allgemeinen Formel I handelt es sich um gegenüber Isocanaten reaktive Verbindungen.

Die Herstellung von Schaumstoffen auf Isocyanatbasis ist an sich bekannt und z.B. in der DE-OS 16 94 142, DE-OS 16 94 215 und DE-OS 17 20 768 beschrieben.

Es handelt sich dabei vorwiegend um Urethan- und/oder Isocyanurat- und/oder Allophanat- und/oder Uretdion- und/oder Harnstoff- und/oder Carbodiimidgruppen aufweisende Schaumstoffe. Die erfindungsgemäße Verwendung erfolgt vorzugsweise bei der Herstellung von Polyurethan- und Polyisocyanurat-Schaumstoffen.

Für die Herstellung der Schaumstoffe auf Isocyanatbasis werden eingesetzt: Als Ausgangskomponenten: Aliphatische, cycloaliphatische, araliphatische, aromatische und heterocyclische Polyisocyanate (z.B. W. Siefken in Justus Liebigs Annalen der Chemie, 562, S. 75-136), beispielsweise solche der Formel $Q(NCO)_n$ , in der n = 2 bis 4, vorzugsweise 2 bis 3, und Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen, bedeuten, z.B. solche Polyisocyanate, wie sie in der DE-OS 28 32 253, Seiten 10 bis 11, beschrieben werden. Besonders bevorzugt werden in der Regel die technisch leicht zugänglichen Polyisocyanate, die sich vom 2,4- und/oder 2,6-Toluylendiisocyanat bzw. von 4,4'- und/oder 2,4'-Diphenylmethandiisocyanat ableiten.

Ausgangskomponenten sind ferner Verbindungen mit mindestens zwei gegenüber Isocyanaten reaktionsfähigen Wasserstoffatomen mit einem Molekulargewicht von 400 bis 10.000 ("Polyolkomponente"). Hierunter versteht man neben Aminogruppen, Thiogruppen oder Carboxylgruppen aufweisende Verbindungen, vorzugsweise Hydroxylgruppen aufweisende Verbindungen, insbesondere 2 bis 8 Hydroxylgruppen aufweisende Verbindungen, speziell solche vom Molekulargewicht 1000 bis 6000, vorzugsweise 200 bis 6000, in der Regel 2 bis 8, vorzugsweise aber 2 bis 6 Hydroxylgruppen aufweisende Polyether und Polyester sowie Polycarbonate und Polyesteramide, wie sie für die Herstellung von homogenen und von zellförmigen Polyurethanen an sich bekannt sind und wie sie etwa in der DE-OS 28 32 253 beschrieben werden. Die mindestens zwei Hydroxylgruppen aufweisenden Polyether und Polyester sind erfindungsgemäß bevorzugt.

Gegebenenfalls sind weitere Ausgangskomponenten Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiogruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4 gegenüber Isocyanaten reaktionsfähige Wasserstoffatome auf. Beispiele hiefür werden ebenfalls in der DE-OS 28 32 253 beschrieben.

Wasser und/oder leicht flüchtige organische Substanzen dienen als Treibmittel, z.B. n-Pentan, i-Pentan, Cyclopentan, halogenhaltige Alkane, wie Trichlormethan, Methylenchlorid oder Chlorfluoralkane, $CO_2$ und andere.

Gegebenenfalls werden Hilfs- und Zusatzmittel mitverwendet wie Katalysatoren der an sich bekannten Art, oberflächenaktive Zusatzstoffe, wie Emulgatoren und Schaumstabilisatoren, Reaktionsverzögerer, z.B. sauer reagierende Stoffe wie Salzsäure oder organische Säurehalogenide, ferner Zellregler der an sich bekannten Art wie Paraffine oder Fettalkohole und Dimethylpolysiloxane sowie Pigmente oder Farbstoffe und weitere Flammschutzmittel der an sich bekannten Art, ferner Stabilisatoren gegen Alterungs- und Witterungseinflüsse, Weichmacher und fungistatisch und bakteriostatisch wirkende Substanzen sowie Füllstoffe, wie Bariumsulfat, Kieselgur, Ruß- oder Schlämmkreide

(DE-OS 27 32 292).

Eine weitere Übersicht über die zur Herstellung von Polyurethanschaumstoffen verwendeten Roh-, Hilfs- und Zusatzstoffe sowie die Verfahrenstechnik zur Herstellung dieser ist im Kunststoff-Handbuch Kunststoff-Handbuch [Plastics Handbook], Volume VII, Carl Hanser Verlag, Munich, 1993, pp. 139 - 192 gegeben.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, Carl Hanser Verlag, München, 1993, auf den Seiten 104 bis 123 beschrieben.

Durchführung des Verfahrens zur Herstellung von Polyurethanschaumstoffen: Die Reaktionskomponenten werden nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 2 764 565 beschrieben werden. Einzelheiten über Verarbeitungseinrichtungen, die auch erfindungsgemäß in Frage kommen, werden im Kunststoff-Handbuch, Kunststoff-Handbuch [Plastics Handbook], Volume VII, Carl Hanser Verlag, Munich, 1993, pp. 139 - 192 beschrieben.

Erfindungsgemäß lassen sich auch kalthärtende Schaumstoffe herstellen (GB-PS 11 62 517, DE-OS 21 53 086).

Selbstverständlich können aber auch Schaumstoffe durch Blockverschäumung oder nach dem an sich bekannten Doppeltransportbandverfahren hergestellt werden.

Polyisocyanuratschaumstoffe werden nach den hierfür bekannten Verfahren und Bedingungen hergestellt.

Somit können die erfindungsgemäß flammgeschützten Polyurethan-Kunststoffe als Elastomere durch Gießen, als Hart- oder Weichschäume in kontinuierlicher oder diskontinuierlicher Herstellungsweise oder als geschäumte oder massive Formartikel hergestellt werden.

Bevorzugt sind Weichschaumstoffe, die durch ein Blockverschäumungsverfahren hergestellt werden.

Die nach der Erfindung erhältlichen Produkte finden z.B. folgende Anwendung: Möbelpolsterungen, Textileinlagen, Matratzen, Automobilsitze, Armlehnen und Bauelemente sowie Sitz- und Armaturverkleidungen.

Eingesetzte Substanzen

Methanphosphonsäureoxethylat OMPS (Houben-Weyl, Band XII/1, Teil 1, S. 423 - 524) Phosphorgehalt: 12,5 % (m/m), Säurezahl: < 1 mg KOH/g, Hydroxylzahl: 440 mg KOH/g

Tetrakis(2-chlorethyl)ethylendiphosphonat (®Antiblaze V 66, Rhodia Consumer Specialities Limited)

Polyetherpolyol ®Desmophen PU 20 WB 05, Bayer AG, Polyether-Polyol

Katalysatoren ®Niax A-1, OSi Specialities Inc., Mischung von 70 % Bis-(2-Dimethylaminomethyl)ether und 30 % Dipropylenglykol

®Dabco 33-LV, Air Products, eine Mischung von 67 % Dipropylenglycol und 33 % Diazabicyclo(2,2,2)octan

Stabilisator ®Tegostab B8232, Th. Goldschmidt AG, polyethermodifiziertes Polysiloxan

Toluylen-diisocyanat ®Desmodur T80, Bayer AG, eine Mischung aus 2,4-Toluylen-diisocyanat und 2,6-Toluylen-diisocyanat

Die Erfindung wird durch die nachstehenden Beispiele erläutert:

Die oben beschriebenen Flammschutzmittel Antiblaze V 66, OMPS sowie die erfindungsgemäße Mischung aus Hydroxyalkylphosphonaten und chlorierten Phosphorsäureestern (50/50) wurden in Polyurethanweichschäumen mit einem NCO-Index von 105 folgender Formulierung eingearbeitet. Der NCO-Index ist eine Kennzahl, die das prozentuale Verhältnis der eingesetzten Isocyanatmenge zur stöchiometrischen, d.h. berechneten Isocyanatmenge bei der Umsetzung je einer isocyanataktiven Gruppe mit einer Isocyanatgruppe beschreibt.

Tabelle1:

| Polyurethanweichschaumformulierung | | | |
|---|---|---|---|
| Beispiel | 1 | 2 | 3 |
| Polyetherpolyol (®Desmophen PU 20 WB 05) | 100 Teile | 100 Teile | 100 Teile |
| Wasser | 4 Teile | 4 Teile | 4 Teile |
| Flammschutzmittel | 12 Teile V 66 | 8 Teile OMPS | 4 Teile V 66 / 4 Teile OMPS |
| Bis(2-Dimethylaminoethyl)ether/Glykol-Mischung (®Niax A1) | 0,1 Teile | 0,1 Teile | 0,1 Teile |

Tabelle1: (fortgesetzt)

| Polyurethanweichschaumformulierung | | | |
|---|---|---|---|
| Beispiel | 1 | 2 | 3 |
| Diazabicyclo(2,2,2)octane/Dipropylenglycol (®Dabco 33-LV) | 0,2 Teile | 0,2 Teile | 0,2 Teile |
| Siliconstabilisator (®Tegostab B 8232) | 1,0 Teile | 1,0 Teile | 1,0 Teile |
| Toluylen-diisocyanat (®Desmodur T80) | Index 105 | Index 105 | Index 105 |

Für die Herstellung der Polyurethanweichschäume der Beispiele 1 bis 3 wurden alle Komponenten intensiv vermischt und zuletzt das Toluydendiisocyanat eingearbeitet.

Die Flammfestigkeit der Polyurethanweichschäume der Beispiele 1 bis 3 wurde mittels des FMVSS 302 - Tests (Federal Motor Vehicle Safety Standard) geprüft.

Terminologie zur Beurteilung des Brandverhaltens:

SE Selbsterlöschend
SE/NBR Selbsterlöschend/keine Brennrate
SE/B Selbsterlöschend/mit Brennrate
B Brennrate

Die Produkte der Beispiele 1 bis 3 erreichten alle die Brandklasse SE.

Die Produkte der Beispiele 1 bis 3 wurden nach verschiedenen Methoden gealtert und sowohl die Stauchhärte als auch die Zugfestigkeit bestimmt.
Wärmealterung*: 7 Tage bei 140°C nach DIN 53578
Dampfalterung**: Schnellalterung im Dampfautoklaven nach DIN 53578 bei 120°C (5 Stunden, 3 Zyklen).
Stauchhärte: bei 40 % Stauchung nach DIN 53577

Zugfestigkeit: nach DIN 53571

Tabelle 2:

| Zugfestigkeit (alle Werte in N) | | | |
|---|---|---|---|
| Zugfestigkeit | Flammschutzmittel aus Beispiel 1 | Flammschutzmittel aus Beispiel 2 | Flammschutzmittel aus Beispiel 3 |
| "Anfangsschaum" | 11,7 | 10,8 | 11,5 |
| Wärmealterung* | 10 | 8 | 9,3 |
| Dampfalterung** | 7,4 | 4,2 | 7,2 |

Tabelle 3:

| Stauchhärte (alle Werte in kPa) | | | |
|---|---|---|---|
| | Flammschutzmittel aus Beispiel 1 | Flammschutzmittel aus Beispiel 2 | Flammschutzmittel aus Beispiel 3 |
| "Anfangsschaum" | 5,37 | 3,41 | 5,42 |
| Wärmealterung* | 5,96 | 3,79 | 6,50 |
| Dampfalterung** | 5,07 | 2,13 | 5,22 |

Es konnte somit überraschenderweise gezeigt werden, dass bei einer synergistischen Wirkung der erfindungsgemäßen Mischung aus Hydroxyalkylphosphonaten und chlorierten Phosphorsäureestern die Brandklasse SE (FMVSS) mit Einsatzmengen von 8 php erreicht werden kann, die erwartungsgemäß nur bei alleiniger Verwendung des im Vergleich zu Antiblaze V66 effektiveren Flammschutzmittels OMPS erreichbar schienen.

Es können flammgeschützte Polyurethane mit geringeren Gehalt an OMPS hergestellt werden, ohne dass die bei Verwendung von hydroxylgruppentragenden Phosphonsäureester erwartete geringe Stauchhärte und Zugfestigkeit der Schaumstoffe beobachtet wird.

In dieser Weise zeichnet sich damit der mit der erfindungsgemäßen Mischung flammgeschützte Polyurethanweichschaum des Beispiels 3 durch einen im Vergleich zum Beispiel 1 halbierten Chlorgehalt bei nahezu identischen Stauchhärten, Zugfestigkeiten und gleichem Brandverhalten aus.

**Patentansprüche**

1. Flammwidrige Polyurethanweichschäume mit hoher Alterungsbeständigkeit, **dadurch gekennzeichnet, dass** sie eine Mischung aus Hydroxyalkylphosphonaten und chlorierten Phosphorsäureestern enthalten.

2. Flammwidrige Polyurethanweichschäume nach Anspruch 1, **dadurch gekennzeichnet, dass** die Mischung 40 bis 60 Gew.-% Hydroxyalkylphosphonate und 60 bis 40 Gew.-% chlorierte Phosphorsäureester enthält.

3. Flammwidrige Polyurethanweichschäume nach Anspruch 1 oder 2, **dadurch gekennzeichnet, dass** die Mischung 45 bis 55 Gew.-% Hydroxyalkylphosphonate und 55 bis 45 Gew.-% chlorierte Phosphorsäureester enthält.

4. Flammwidrige Polyurethanweichschäume nach einem oder mehreren der Ansprüche 1 bis 3, **dadurch gekennzeichnet, dass** die Hydroxyalkylphosphonate der allgemeinen Formel I entsprechen,

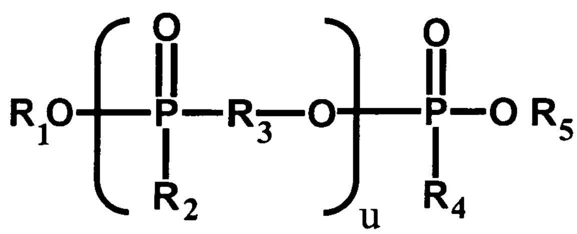

(I)

in der
u eine Kettenlänge von 0 bis 10
$R_1$, $R_5$ gleich oder verschieden sind und einen hydroxylgruppenhaltigen Rest der allgemeinen Formel II

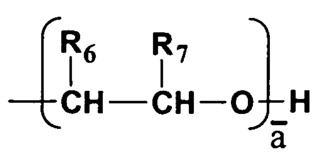

(II)

$R_2$, $R_4$ gleich oder verschieden sind und eine Alkyl-, Aryl- oder Alkylarylgruppe mit 1 bis 12 C-Atomen
$R_3$ einen Rest der allgemeinen Formel III

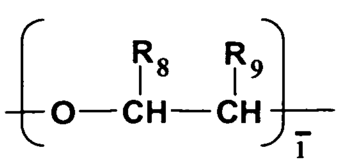

(III) $\bar{a}$ eine durchschnittliche Kettenlänge von 0 bis 4

$\bar{i}$ eine durchschnittliche Kettenlänge von 0 bis 4 bedeuten und

$R_6$, $R_7$, $R_8$, $R_9$ gleich oder verschieden sind und unabhängig voneinander für H oder eine Alkylgruppe mit 1 bis 6 C-Atomen stehen.

5. Flammwidrige Polyurethanweichschäume nach einem oder mehreren der Ansprüche 1 bis 4, **dadurch gekennzeichnet, dass**
u eine Kettenlänge von 0 oder 1
$\bar{a}$ eine durchschnittliche Kettenlänge von 1 bis 2
$\bar{i}$ eine durchschnittliche Kettenlänge von 1 bis 2 bedeuten und
$R_2$, $R_4$ gleich oder verschieden sind und unabhängig voneinander für eine Alkylgruppe mit 1 bis 5 C-Atomen stehen
$R_6$, $R_7$, $R_8$, $R_9$ gleich oder verschieden sind und unabhängig voneinander für H oder eine Alkylgruppe mit 1 oder 2 C-Atomen stehen.

6. Flammwidrige Polyurethanweichschäume nach einem oder mehreren der Ansprüche 1 bis 5, **dadurch gekennzeichnet, dass** es sich bei den Hydroxyalkylphosphonaten um Methanphosphonsäureoxethylat, Ethanphosphonsäureoxethylat, Methanphosphonsäurepropoxylat, Ethanphosphonsäure-propoxylat, Propanphosphonsäureoxethylat, Propanphosphonsäurepropoxylat, Diethylenglykol-bis-(hydroxyalkoxy)methanphosphonat, und/oder Ethylenglykol-bis-(hydroxyalkoxy)ethanphosphonat handelt.

7. Flammwidrige Polyurethanweichschäume nach einem oder mehreren der Ansprüche 1 bis 6, **dadurch gekennzeichnet, dass** es sich bei den halogenierten Phosphorsäureestern um Tris(2-chlorethyl)phosphat, Tris(2-chlorisopropyl)phosphat, Dichlorisopropylphosphat, Trisdichlorisopropylphosphat und/oder Tetrakis(2-chlorethyl)ethylendiphosphat handelt.

8. Verfahren zur Herstellung von flammwidrigen Polyurethanweichschäumen mit hoher Alterungsbeständigkeit, **dadurch gekennzeichnet, dass** man organische Polyisocyanate mit Verbindungen mit mindestens 2 gegenüber Isocyanaten reaktionsfähigen Wasserstoffatomen mit üblichen Treibmitteln, Stabilisatoren, Aktivatoren und/oder weiteren üblichen Hilfs- und Zusatzstoffen in Gegenwart von halogenfreien Hydroxyalkylphosphonaten der allgemeinen Formel I und chlorierten Phosphorsäureestern umsetzt.

9. Verfahren zur Herstellung von flammwidrigen Polyurethanweichschäumen mit hoher Alterungsbeständigkeit, **dadurch gekennzeichnet, dass** man organische Polyisocyanate mit Verbindungen mit mindestens 2 gegenüber Isocyanaten reaktionsfähigen Wasserstoffatomen mit üblichen Treibmitteln, Stabilisatoren, Aktivatoren und/oder weiteren üblichen Hilfs- und Zusatzstoffen in Gegenwart einer Mischung von halogenfreien Hydroxyalkylphosphonaten der allgemeinen Formel I und chlorierten Phosphorsäureestern umsetzt.

10. Verfahren nach Anspruch 8 oder 9, **dadurch gekennzeichnet, dass** Mischungen aus Hydroxyalkylphosphonaten der allgemeinen Formel I und chlorierten Phosphorsäureestern in einer Menge von 0,01 bis 50 Gewichtsteilen, bezogen auf den resultierenden Polyurethanweichschaum, eingesetzt werden.

11. Verfahren nach einem oder mehreren der Ansprüche 8 bis 10, **dadurch gekennzeichnet, dass** Mischungen aus Hydroxyalkylphosphonaten der allgemeinen Formel I und chlorierten Phosphorsäureestern in einer Menge von 0,5 bis 20 Gewichtsteilen, bezogen auf den resultierenden Polyurethanweichschaum, eingesetzt werden.

12. Verfahren nach einem oder mehreren der Ansprüche 8 bis 11, **dadurch gekennzeichnet, dass** Mischungen aus Hydroxyalkylphosphonaten der allgemeinen Formel I und chlorierten Phosphorsäureestern in einer Menge von 0,5 bis 10 Gewichtsteilen, bezogen auf den resultierenden Polyurethanweichschaum, eingesetzt werden.

13. Verfahren nach einem oder mehreren der Ansprüche 8 bis 12, **dadurch gekennzeichnet, dass** es sich bei den Hydroxyalkylphosphonaten der allgemeinen Formel I um bei Verarbeitungstemperatur flüssige Verbindungen handelt.

14. Verfahren nach einem oder mehreren der Ansprüche 8 bis 13, **dadurch gekennzeichnet, dass** es sich bei den Hydroxyalkylphosphonaten der allgemeinen Formel I um gegenüber Isocyanaten reaktive Verbindungen handelt.

Europäisches Patentamt

# EUROPÄISCHER RECHERCHENBERICHT

Nummer der Anmeldung
EP 03 02 2293

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 18 12 165 A (HENKEL&CIE) 18. Juni 1970 (1970-06-18) * Seite 2, Zeile 4 - Seite 5, Zeile 23; Anspruch 1; Beispiele * | 1-5,7-14 | C08G18/38 C08J9/00 |
| A | EP 0 152 691 A (MOBIL OIL) 28. August 1985 (1985-08-28) * Seite 2, Zeile 19 - Zeile 26 * * Seite 3, Zeile 14 - Zeile 17; Ansprüche 1-3 * | 1 | |
| D,A | DE 43 42 972 A (HOECHST) 22. Juni 1995 (1995-06-22) * Seite 2, Zeile 5 - Seite 5, Zeile 55; Ansprüche; Beispiele * | 1-6 | |
| A | PAPA: "Reactive Falme retardants for Polyurethane Foams" INDUSTRIAL AND ENGINEERING CHEMISTRY PRODUCT RESEARCH AND DEVELOPMENT, Bd. 9, Nr. 4, Dezember 1970 (1970-12), Seiten 478-496, XP002268564 * Seite 488, Spalte 2, Zeile 36 - Seite 489, Spalte 2, Zeile 16 * | 1 | RECHERCHIERTE SACHGEBIETE (Int.Cl.7) C08G C08J |

Der vorliegende Recherchenbericht wurde für alle Patentansprüche erstellt

| Recherchenort | Abschlußdatum der Recherche | Prüfer |
|---|---|---|
| DEN HAAG | 29. Januar 2004 | Bourgonje, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie,übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 03 02 2293

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-01-2004

| Im Recherchenbericht angeführtes Patentdokument | Datum der Veröffentlichung | Mitglied(er) der Patentfamilie | Datum der Veröffentlichung |
|---|---|---|---|
| DE 1812165 A | 18-06-1970 | DE 1812165 A1 | 18-06-1970 |
| EP 0152691 A | 28-08-1985 | US 4521547 A | 04-06-1985 |
| | | CA 1238148 A1 | 14-06-1988 |
| | | EP 0152691 A1 | 28-08-1985 |
| | | ES 8604276 A1 | 01-06-1986 |
| | | JP 60170638 A | 04-09-1985 |
| DE 4342972 A | 22-06-1995 | DE 4342972 A1 | 22-06-1995 |
| | | AT 182893 T | 15-08-1999 |
| | | CA 2136770 A1 | 17-06-1995 |
| | | CZ 9403174 A3 | 12-07-1995 |
| | | DE 59408579 D1 | 09-09-1999 |
| | | EP 0658561 A1 | 21-06-1995 |
| | | ES 2137300 T3 | 16-12-1999 |
| | | JP 7258371 A | 09-10-1995 |
| | | US 5608100 A | 04-03-1997 |

EPO FORM P0461

Für nähere Einzelheiten zu diesem Anhang : siehe Amtsblatt des Europäischen Patentamts, Nr.12/82